# EUROPEAN PATENT APPLICATION

(11) **EP 4 746 218 A1**
(43) Date of publication of application: **20.05.2026**
(21) Application number: 24838690.6
(22) Date of filing: 04.07.2024
(51) Int. Cl.: H02G 1/16, H01B 7/14, H01B 13/26, H01B 9/02

(54) **SUBMARINE CABLE REPAIRING METHOD AND SUBMARINE CABLE**

(30) Priority: 10.07.2023 CN 202310835561
(71) Applicant: Zhongtian Technology Submarine Cable Co., Ltd., Jiangsu 226000 (CN); South Sea Submarine Cable Co., Ltd., Shanwei, Guangdong 516545 (CN); ZHONGTIAN DAFENG SUBMARINE CABLE CO., LTD., Jiangsu 224145 (CN)
(72) Inventor: WANG, Haiyang, Nantong, Jiangsu 226000 (CN); XIE, Shuhong, Nantong, Jiangsu 226000 (CN); XUE, Jianlin, Nantong, Jiangsu 226000 (CN); HU, Ming, Nantong, Jiangsu 226000 (CN); WANG, Wenchao, Nantong, Jiangsu 226000 (CN); ZHAO, Youlin, Nantong, Jiangsu 226000 (CN); WANG, Liyuan, Nantong, Jiangsu 226000 (CN); NIE, Ying, Nantong, Jiangsu 226000 (CN); SUN, Yanyu, Nantong, Jiangsu 226000 (CN); CHEN, Jie, Nantong, Jiangsu 226000 (CN)
(74) Representative: Boult Wade Tennant LLP
(86) International application number: PCT/CN2024/103691
(87) International publication number: WO 2025/011437

(57) **Abstract**

The present invention provides a repair method for a submarine cable and a submarine cable. The repair method for the submarine cable provided in the present invention includes the following steps: determining a fault point of a cable, where the cable includes a conductor and a wrapping layer, the wrapping layer is cladded around the conductor; stripping a portion of the wrapping layer, where the wrapping layer includes a metal armor layer and a conductor shielding layer, stripping the metal armor layer includes: stripping the metal armor layer with a length of 1.5 to 2.5 times an armor-pitch length on two sides of the fault point, with a disconnection point of the stripped metal armor layer being 0.3 to 0.7 times the armor-pitch length away from the fault point, and bending the stripped metal armor layer in opposite directions at the disconnection point; repairing the conductor and the wrapping layer, where repairing the conductor shielding layer includes: wrapping the same material as the conductor shielding layer in the cable around the exposed conductor. The repair method for the submarine cable and the submarine cable provided in the present invention can reduce the construction period and construction cost.

## Description

The present application claims priority to Chinese Patent Application No 202310835561.2, filed with the China National Intellectual Property Administration on July 10, 2023 and entitled "REPAIR METHOD FOR SUBMARINE CABLE AND SUBMARINE CABLE", which is incorporated herein by reference in its entirety.

### TECHNICAL FIELD

The present invention relates to a field of cables, in particular to a repair method for a submarine cable and a submarine cable.

### BACKGROUND

In recent years, the development of marine clean energy in China has been strong, with rapid growth in offshore wind power and a surge in demand for submarine cables. However, the submarine cable may sometimes be damaged during transportation and movement.

At present, after the submarine cable is damaged, a whole prefabricated intermediate joint is generally used for emergency repair and maintenance, and its exterior is mechanically protected by a metal protective box filled with a gel.

However, due to a large size, it is difficult for the prefabricated intermediate joint structure to meet the transportation requirement of the submarine cable. Consequently, the prefabricated intermediate joint is generally made on site for emergency repair during installation of the submarine cable, resulting in a long construction period and a large cost.

### SUMMARY

In order to solve at least one problem mentioned in the BACKGROUND section, the present invention provides a repair method for a submarine cable and a submarine cable, which can reduce the construction period and construction cost.

In order to achieve the above object, the present invention provides the following technical solution.

In a first aspect, the present invention provides a repair method for a submarine cable, including the following steps:
determining a fault point of a cable, where the cable includes a conductor and a wrapping layer, the wrapping layer is cladded around the conductor;
stripping a portion of the wrapping layer at the fault point to expose a portion of the conductor of the cable, where the wrapping layer includes a metal armor layer and a conductor shielding layer, and stripping the portion of the wrapping layer at the fault point includes: stripping the metal armor layer and the conductor shielding layer;
stripping the metal armor layer includes: stripping the metal armor layer with a length of 1.5 to 2.5 times an armor-pitch length on two sides of the fault point and making a disconnection point of the stripped metal armor layer be 0.3 to 0.7 times the armor-pitch length away from the fault point; and bending the stripped metal armor layer in opposite directions at the disconnection point and ensuring that a bending angle of the metal armor layer is less than 60°;
heating the exposed portion of the conductor at a temperature of 80-85 °C for 6-8 hours; and
repairing the conductor and the wrapping layer, where repairing the wrapping layer includes: repairing the conductor shielding layer and the metal armor layer;
wherein repairing the conductor shielding layer includes: wrapping the exposed conductor with the same material as the conductor shielding layer in the cable, performing molding and vulcanization by using an extrusion die at a temperature of 155-165 °C for 25 to 35 minutes to form a conductor shielding recovery layer on a surface of the conductor, and sanding a surface of the conductor shielding recovery layer with sandpaper.

As an optional implementation, the wrapping layer further includes an insulation layer, and the insulation layer is cladded around the conductor shielding layer; repairing the conductor and the wrapping layer further includes: repairing the insulation layer; repairing the insulation layer includes the following steps:
machining fracture edges of the insulation layer at two ends of the conductor shielding recovery layer to respectively form a conical surface; and
cladding the same material as the insulation layer around the conductor shielding recovery layer and the conical surface in a manner of extruding by an extruder or wrapping by an insulation tape to form an insulation recovery layer, where a slope angle of the conical surface is between 30 °-40 °.

As an optional implementation, repairing the insulation layer further includes the following steps: performing a heating cross-linking treatment on the insulation recovery layer using a vulcanization mold at a temperature of 240-280 °C for 6-8 hours to ensure that a surface of the insulation recovery layer is free of bubbles, pits or cracks.

As an optional implementation, repairing the insulation layer further includes the following steps: wrapping a heating tape around a surface of the insulation recovery layer after the heating cross-linking treatment at a temperature of 85-90 °C to degas, with a degassing time being not less than 24 hours.

As an optional implementation, repairing the insulation layer further includes the following steps: sanding the surface of the insulation recovery layer after degassing by using a sand belt until smooth, and making a diameter of the cable at the insulation recovery layer 2-3 mm larger than a diameter of the cable at the insulation layer.

As an optional implementation, repairing the metal armor layer includes the following steps:
removing asphalt on a surface of the armor metal layer at a fracture using acetylene flame and stearic acid;
welding the armor metal layer after removing the asphalt at the fracture; and
spraying asphalt paint onto the welded armor metal.

As an optional implementation, repairing the conductor specifically includes the following steps:
sanding a surface of the conductor until smooth with sandpaper; and
wrapping a semiconductive tape around the surface of the conductor after sanding smooth.

As an optional implementation, repairing the conductor specifically includes the following steps:
repairing and filling a damaged area of the conductor by brazing;
sanding the surface of the conductor after repairing and filling until smooth by using sandpaper; and
wrapping a semiconductive tape around the surface of the conductor.

As an optional implementation, a length of the exposed portion the conductor of the cable is greater than 20 cm.

In a second aspect, the present invention further provides a submarine cable, where the submarine cable is applied to any one of the repair methods for the submarine cable in the first aspect.

The repair method for a submarine cable provided in the present invention includes the following steps: determining a fault point of a cable, where the cable includes a conductor and a wrapping layer, the wrapping layer is cladded around the conductor; stripping a portion of the wrapping layer at the fault point to expose a portion of the conductor of the cable, where the wrapping layer includes a metal armor layer and a conductor shielding layer, stripping the portion of the wrapping layer at the fault point includes: stripping the metal armor layer and the conductor shielding layer, where stripping the metal armor layer includes: stripping a metal armor layer with a length of 1.5 to 2.5 times an armor-pitch length on two sides of the fault point and ensuring that a disconnection point of the stripped metal armor layer is 0.3 to 0.7 times the armor-pitch length away from the fault point; and bending the stripped metal armor layer in opposite directions at the disconnection point and ensuring that a bending angle of the metal armor layer is less than 60°; heating the exposed portion of the conductor at a temperature of 80-85 °C for 6-8 hours; and repairing the conductor and the wrapping layer, where repairing the wrapping layer includes: repairing the conductor shielding layer and the metal armor layer, where repairing the conductor shielding layer includes: wrapping the same material as the conductor shielding layer in the cable around the exposed conductor, performing molding and vulcanization by using an extrusion die at a temperature of 155-165 °C for 25 to 35 minutes to form a conductor shielding recovery layer on a surface of the conductor, and sanding a surface of the conductor shielding recovery layer with sandpaper. In the repair method for a submarine cable provided in the present invention, a fault point of a cable is firstly determined, where the cable includes a conductor and a wrapping layer, the wrapping layer is cladded around the conductor; next, the wrapping layer of a portion of the cable at the fault point is stripped to expose a portion of the conductor of the cable; and then the conductor and the wrapping layer are repaired, where the wrapping layer includes a metal armor layer and a conductor shielding layer, the conductor shielding layer is cladded around the conductor. When stripping the metal armor layer, a metal armor layer with a length of 1.5 to 2.5 times an armor-pitch length on two sides of the fault point can be striped, and a disconnection point of the stripped metal armor layer is 0.3 to 0.7 times the armor-pitch length away from the fault point, the stripped metal armor layer is bent in opposite directions at the disconnection point, and the bending angle of the metal armor layer is less than 60°. When repairing the conductor shielding layer, the same material as the conductor shielding layer in the cable is wrapped around the exposed conductor, and molding and vulcanization is performed by using an extrusion die, and after the vulcanization, a surface of the conductor shielding recovery layer is sanded with sandpaper. With this method, a damaged cable can be repaired on site, and the repaired cable can be consistent with the original cable without affecting the transfer and transportation of the cable, there is no need to wait for the cable to be repaired during installation, which reduces the construction period and the construction cost.

### BRIEF DESCRIPTION OF DRAWINGS

In order to more clearly illustrate the technical solutions in the embodiments of the present invention or in prior art, the following will briefly introduce the accompanying drawings that need to be used in the description of the embodiments or the prior art, and it will be obvious that the accompanying drawings in the following description are some of the embodiments of the present invention, and for an ordinary person skilled in the art, other accompanying drawings can be obtained based on these accompanying drawings without creative labor.
FIG. 1 is a flowchart of a repair method for a submarine cable according to an embodiment of the present invention.
FIG. 2 is a schematic cross-section diagram of a first cable in a repair method for a submarine cable according to an embodiment of the present invention.
FIG. 3 is a schematic cross-section diagram of a second cable in a repair method for a submarine cable according to an embodiment of the present invention.
FIG. 4 is a schematic diagram of a submarine cable during repair according to an embodiment of the present invention.
FIG. 5 is a schematic diagram of a cable repaired by a repair method for a submarine cable according to an embodiment of the present invention.

### Reference numbers:

- 100-: cable;
- 110-: conductor;
- 120-: conductor shielding layer;
- 130-: insulation layer;
- 140-: metal armor layer;
- 150-: outer coating layer;
- 160-: conductor shielding recovery layer;
- 170-: insulation recovery layer.

### DESCRIPTION OF EMBODIMENTS

The technical solutions in the embodiments of the present invention will be described clearly and completely in the following in conjunction with the accompanying drawings in the embodiments of the present invention, and it is obvious that the described embodiments are some of the embodiments of the present invention and not all of the embodiments. Based on the embodiments in the present invention, all other embodiments obtained by an ordinary person skilled in the art without creative labor are within the protection scope of the present invention.

After the existing submarine cable is damaged, a whole prefabricated intermediate joint is generally used for emergency repair and maintenance, and its exterior is mechanically protected by a metal protective box filled with a gel. However, due to the large size, it is difficult for the prefabricated intermediate joint structure to meet the transportation requirement of the submarine cable. Consequently, the prefabricated intermediate joint is generally made on site for emergency repair during installation of the submarine cable, resulting in a long construction period and a large cost.

In view of this, the present invention provides a repair method for a submarine cable, the method including: firstly determining a fault point of a cable, where the cable includes a conductor and a wrapping layer, the wrapping layer is cladded around the conductor; next, stripping the wrapping layer of a portion of the cable at the fault point to expose a portion of the conductor of the cable; and then repairing the conductor and the wrapping layer, where the wrapping layer includes a metal armor layer and a conductor shielding layer, the conductor shielding layer is cladded around the conductor. When stripping the metal armor layer, a metal armor layer with a length of 1.5 to 2.5 times an armor-pitch length on two sides of the fault point can be striped, a disconnection point of the stripped metal armor layer is 0.3 to 0.7 times the armor-pitch length away from the fault point, the stripped metal armor layer is bent in opposite directions at the disconnection point, and the bending angle of the metal armor layer is less than 60°. When repairing the conductor shielding layer, the same material as the conductor shielding layer in the cable is wrapped around the exposed conductor, and molding and vulcanization is performed by using an extrusion die, and after the vulcanization, a surface of the conductor shielding recovery layer is sanded with sandpaper. With this method, a damaged cable can be repaired on site, and the repaired cable can be consistent with the original cable without affecting the transfer and transportation of the cable, there is no need to wait for the cable to be repaired during installation, which reduces the construction period and construction cost.

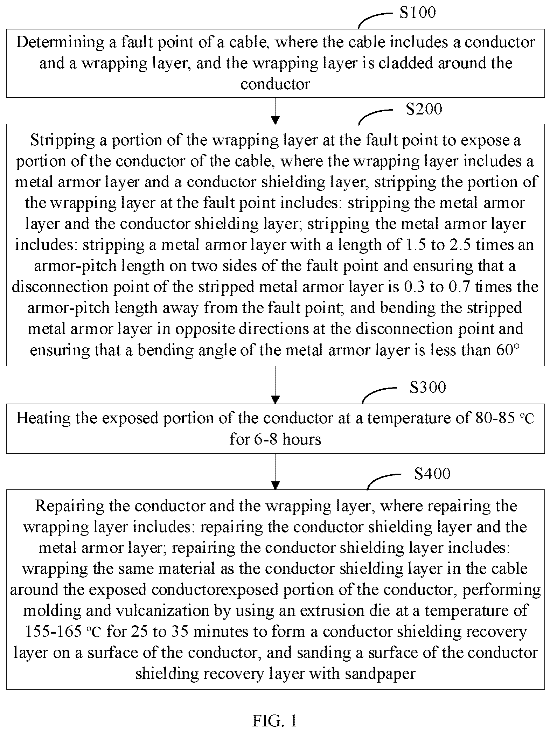

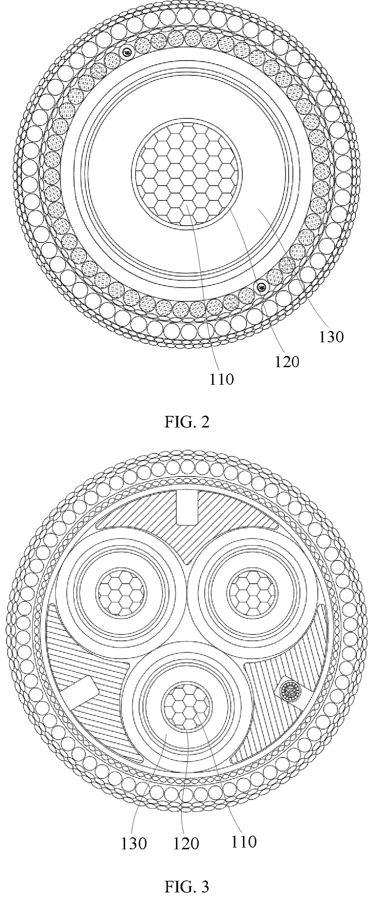

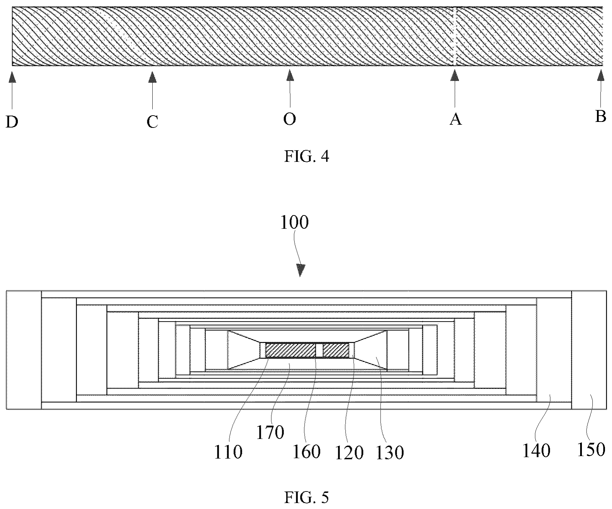

FIG. 1 is a flowchart of a repair method for a submarine cable according to an embodiment of the present invention; FIG. 2 is a schematic cross-section diagram of a first cable in a repair method for a submarine cable according to an embodiment of the present invention; FIG. 3 is a schematic cross-section diagram of a second cable in a repair method for a submarine cable according to an embodiment of the present invention; FIG. 4 is a schematic diagram of a submarine cable during repair according to an embodiment of the present invention; and FIG. 5 is a schematic diagram of a cable repaired by a repair method for a submarine cable according to an embodiment of the present invention. As shown in FIGS. 1 to 5, the present invention provides a repair method for a submarine cable, including the following steps.
S100, determining a fault point of a cable, where the cable includes a conductor and a wrapping layer, and the wrapping layer is cladded around the conductor;
S200, stripping a portion of the wrapping layer at the fault point to expose a portion of the conductor of the cable, where the wrapping layer includes a metal armor layer and a conductor shielding layer, stripping the portion of the wrapping layer at the fault point includes: stripping the metal armor layer and the conductor shielding layer, where the stripping the metal armor layer includes: stripping a metal armor layer with a length of 1.5 to 2.5 times an armor-pitch length on two sides of the fault point and ensuring that a disconnection point of the stripped metal armor layer is 0.3 to 0.7 times the armor-pitch length away from the fault point; and bending the stripped metal armor layer in opposite directions at the disconnection point and ensuring that a bending angle of the metal armor layer is less than 60°.
S300, heating the exposed portion of the conductor at a temperature of 80-85 °C for 6-8 hours;
S400, repairing the conductor and the wrapping layer, where repairing the wrapping layer includes: repairing the conductor shielding layer and the metal armor layer; and repairing the conductor shielding layer includes: wrapping the same material as the conductor shielding layer in the cable around the exposed conductor, performing molding and vulcanization by using an extrusion die at a temperature of 155-165 °C for 25 to 35 minutes to form a conductor shielding recovery layer on a surface of the conductor, and sanding a surface of the conductor shielding recovery layer with sandpaper.

It can be understood that the armor metal layer is formed by winding a metal wire, and the armor-pitch length refers to a distance that the metal wire of the metal armor layer advances when rotating one turn around the cable core in a direction of a stranding axis.

Where stripping the metal armor layer with a length of 1.5 to 2.5 times the armor-pitch length on two sides of the fault point can provide a sufficient space for the subsequent process operation without affecting the subsequent recovery operation of the metal wire. If the stripped length is too small, it will affect the working space, and if the stripped length is too long, it will increase the difficulty of the recovery of the metal wire.

It can be understood that both repair of the fault point and butt welding of the metal wire will increase the outer diameter of the cable core, and making the disconnection point of the stripped metal armor layer 0.3 to 0.7 times the armor-pitch length away from the fault point can prevent an excessive increase in the outer diameter of the cable at the same position.

Where bending the stripped metal armor layer in opposite directions at the disconnection point and making the bending angle of the metal armor layer less than 60° can facilitate the subsequent repair of the armor metal layer. If the bending angle of the metal armor layer is too large, it will increase the repair time and difficulty of the armor metal layer.

Where heating the exposed portion of the conductor at the temperature of 80-85 °C for 6-8 hours can improve the flexibility of the cable, eliminate internal mechanical stress of the cable, and reduce the shrinkage caused by heating of the cable body insulation during the recovery of the insulation layer.

It should be noted that performing molding and vulcanization by using the extrusion die at the temperature of 155-165 °C can ensure sufficient plasticization of the material. If the temperature is too high, the material may scorch, and if the temperature is too low, the plasticization of the material may not be sufficient. The time of the molding and vulcanization is set to 25 to 35 minutes, which can ensure sufficient vulcanization. If the time is too short, the conductor shielding layer is prone to generating bubbles, resulting in poor electrical performance; and if the time is too long, the material will scorch and the conductor shielding layer will easily protrude.

In the above embodiment, the wrapping layer further includes an insulation layer, and the insulation layer is cladded around the conductor shielding layer; repairing the insulation layer includes the following steps:
machining fracture edges of the insulation layer at two ends of the conductor shielding recovery layer to respectively form a conical surface; cladding the same material as the insulation layer around the conductor shielding recovery layer and the conical surface in a manner of extruding by an extruder or wrapping by an insulation tape to form an insulation recovery layer, where a slope angle of the conical surface is between 30 °-40 °; performing heating cross-linking on the insulation recovery layer using a vulcanization mold to ensure that a surface of the insulation recovery layer is free of bubbles, pits or cracks, where the cross-linking temperature is 240-280 °C, and the cross-linking time is 6-8 hours; wrapping a heating tape around the surface of the insulation recovery layer after the heating cross-linking treatment to degas, where the degassing temperature is 85-90 °C, and the degassing time is not less than 24 hours; and sanding the surface of the insulation recovery layer after degassing by using a sanding belt until smooth, and making a diameter of the cable at the insulation recovery layer 2-3 mm larger than a diameter of the cable at the insulation layer.

In the above embodiments, repairing the metal armor layer includes: removing asphalt on a surface of the armor metal layer at a fracture using acetylene flame and stearic acid; welding the armor metal layer after removing the asphalt at the fracture; and spraying asphalt paint onto the welded armor metal.

Repairing the conductor specifically includes: sanding a surface of the conductor until smooth with sandpaper; wrapping a semiconductive tape around the surface of the conductor after sanding smooth; or repairing and filling a damaged area of the conductor by brazing, sanding a surface of the conductor after repairing and filling until smooth by using sandpaper, and wrapping a semiconductive tape around the surface of the conductor; where a length of the exposed portion the conductor of the cable is greater than 20 cm.

In order to enable those of ordinary skill in the art to have a clearer understanding of the repair method for the submarine cable provided in the present invention, examples will be given in conjunction with specific application scenarios, as follows:
Where the submarine cable to be repaired can include a conductor cable core, a conductor shielding layer, an insulation layer, an insulation shielding layer, a longitudinal water-blocking layer, a radial water-blocking layer, a non-metallic sheath layer, a filler layer, an armor inner cushion layer, a metal armor layer, and an outer coating layer in sequence from inside to outside. Specifically, the conductor cable core can be a water-blocking copper conductor or a water-blocking aluminum conductor, and the water-blocking material inside the conductor can be one or more of a water-blocking tape, a water-blocking yarn, a water-blocking gel, and a water-blocking powder. The conductor shielding layer is formed by extruding a semiconductive shielding material, or wrapping a semiconductive tape followed by extruding a polyethylene shielding material. The insulation layer is formed by extruding a cross-linked polyethylene material. The insulation shielding layer is formed by extruding a semiconductive polyethylene shielding material. The longitudinal water-blocking layer is a wrapped semiconductive buffer water-blocking tape. The radial water-blocking layer is an extruded lead alloy sheath. The non-metallic sheath layer is an extruded semiconductive or insulating polyethylene sheath. When the conductor cable core is a single-core structure, the filler layer is a structure of a PE (polyethylene) filler strip, and an optical unit is embedded within the filler strip, and a quantity of the optical unit is 0-4. When the conductor cable core is a three-core structure, the filler layer is a structure of a formed filler strip, and an optical unit is embedded within the formed filler strip, and a quantity of the optical unit is 0-3. The armor inner cushion layer adopts a polypropylene winding rope. The metal armor layer adopts one of the following structures: round steel wire armor, flat steel wire armor, round copper wire armor, flat copper wire armor, combination armor of round steel wire and round copper wire, and combination armor of flat steel wire and flat copper wire. The surface of the metal armor layer is coated with asphalt or other anti-corrosion materials. The outer coating layer adopts a polypropylene winding rope.

### Embodiment 1

Determining a fault point of a cable, stripping a certain length of an outer coating layer near the fault point, stripping a metal armor layer with a length of 1.5 times an armor-pitch length on two sides of the fault point and making a disconnection point of the stripped metal armor layer 0.3 times the armor-pitch length away from the fault point, bending the stripped metal armor layer in opposite directions at the disconnection point and making a bending angle of the metal armor layer less than 60°; disconnecting the filler layer and the armor inner cushion layer, stripping the non-metallic sheath with a length of 220 cm and the radial water-blocking layer and longitudinal water-blocking layer with a length of 200 cm near the fault point; stripping the insulation shielding layer and shielding layer with a length of 50 cm, and stripping the conductor shielding layer with a length of 21 cm, to expose the conductor with a length of approximately 21 cm; heating and straightening the cable core, where the heating temperature is 80 °C and the heating time is 6 hours; and then, checking the condition of the conductor at the fault point, and if the conductor is not damaged, sanding the conductor smooth with sandpaper, and then wrapping the conductor with a semiconductive tape, and if the conductor is damaged, repairing and filling the damaged part of the conductor by brazing, and after filling, sanding the conductor smooth with sandpaper, and then wrapping with a semiconductive tape, so as to avoid increasing the repair time as the conduct disconnects; and then, machining fracture edges of the insulation layer at two ends of the conductor shielding recovery layer to respectively form a conical surface; cladding the same material as the insulation layer around the conductor shielding recovery layer and the conical surface in a manner of extruding by an extruder or wrapping by an insulation tape, to form an insulation recovery layer, where a slope angle of the conical surface is 30°; performing heating cross-linking on the insulation recovery layer using a vulcanization mold to ensure that a surface of the insulation recovery layer is free of bubbles, pits or cracks, where the cross-linking temperature is 240 °C, and the cross-linking time is 6 hours; wrapping a heating tape around the surface of the insulation recovery layer after the heating cross-linking treatment to degas, where the degassing temperature is 85 °C, and the degassing time is 24 hours; sanding the surface of the insulation recovery layer after degassing by using a sanding belt until smooth and making a diameter of the cable at the insulation recovery layer 2 mm larger than a diameter of the cable at the insulation layer; repairing the insulation shielding layer, the longitudinal water-blocking layer, the radial water-blocking layer, the non-metallic sheath layer, the filler layer, and the armor inner cushion layer in sequence, removing asphalt on a surface of the armor metal layer at a fracture using acetylene flame and stearic acid; welding the armor metal layer after removing the asphalt at the fracture; spraying asphalt paint onto the welded armor metal to complete the repair of the metal armor layer. Where the filler strips are marked with numbers and are joined by high-temperature heating in a corresponding order, and after joining is completed, the filler strips are winded along the path of the optical unit; the armor inner cushion layer is wrapped with two layers of 0.5 mm PBT (polybutylene terephthalate) tape, with an overlap of 30%; the outer coating layer is two layers of polypropylene winded rope.

### Embodiment 2

Determining a fault point of a cable, stripping a certain length of an outer coating layer near the fault point, stripping a metal armor layer with a length of 2 times an armor-pitch length on two sides of the fault point and making a disconnection point of the stripped metal armor layer 0.5 times the armor-pitch length away from the fault point, bending the stripped metal armor layer in opposite directions at the disconnection point and making a bending angle of the metal armor layer less than 60°; disconnecting the filler layer and the armor inner cushion layer, stripping the non-metallic sheath with a length of 230 cm and the radial water-blocking layer and longitudinal water-blocking layer with a length of 210 cm near the fault point; stripping the insulation shielding layer and shielding layer with a length of 60 cm, and stripping the conductor shielding layer with a length of 22 cm, to expose the conductor with a length of approximately 22 cm; heating and straightening the cable core, where the heating temperature is 90 °C and the heating time is 7 hours; and then, checking the condition of the conductor at the fault point, and if the conductor is not damaged, sanding the conductor smooth with sandpaper, and then wrapping the conductor with a semiconductive tape, and if the conductor is damaged, repairing and filling the damaged part of the conductor by brazing, and after filling, sanding the conductor smooth with sandpaper, and then wrapping with a semiconductive tape, so as to avoid increasing the repair time as the conduct disconnects; and then, machining fracture edges of the insulation layer at two ends of the conductor shielding recovery layer to respectively form a conical surface; cladding the same material as the insulation layer around the conductor shielding recovery layer and the conical surface in a manner of extruding by an extruder or wrapping by an insulation tape, to form an insulation recovery layer, where a slope angle of the conical surface is 35°; performing heating cross-linking on the insulation recovery layer using a vulcanization mold to ensure that a surface of the insulation recovery layer is free of bubbles, pits or cracks, where the cross-linking temperature is 250 °C, and the cross-linking time is 7 hours; wrapping a heating tape around the surface of the insulation recovery layer after the heating cross-linking treatment to degas, where the degassing temperature is 90 °C, and the degassing time is 24 hours; sanding the surface of the insulation recovery layer after degassing by using a sanding belt until smooth and making a diameter of the cable at the insulation recovery layer 2.5 mm larger than a diameter of the cable at the insulation layer; repairing the insulation shielding layer, the longitudinal water-blocking layer, the radial water-blocking layer, the non-metallic sheath layer, the filler layer, and the armor inner cushion layer in sequence, removing asphalt on a surface of the armor metal layer at a fracture using acetylene flame and stearic acid; welding the armor metal layer after removing the asphalt at the fracture; spraying asphalt paint onto the welded armor metal to complete the repair of the metal armor layer. Where the filler strips are marked with numbers and are joined by high-temperature heating in a corresponding order, and after joining is completed, the filler strips are winded along the path of the optical unit; the armor inner cushion layer is wrapped with two layers of 0.6 mm PBT (polybutylene terephthalate) tape, with an overlap of 35%; the outer coating layer is three layers of polypropylene winded rope.

### Embodiment 3

Determining a fault point of a cable, stripping a certain length of an outer coating layer near the fault point, stripping a metal armor layer with a length of 2.5 times an armor-pitch length on two sides of the fault point and making a disconnection point of the stripped metal armor layer 0.7 times the armor-pitch length away from the fault point, bending the stripped metal armor layer in opposite directions at the disconnection point and making a bending angle of the metal armor layer less than 60°; disconnecting the filler layer and the armor inner cushion layer, stripping the non-metallic sheath with a length of 240 cm and the radial water-blocking layer and longitudinal water-blocking layer with a length of 220 cm near the fault point; stripping the insulation shielding layer and shielding layer with a length of 70 cm, and stripping the conductor shielding layer with a length of 23 cm, to expose the conductor with a length of approximately 23 cm; heating and straightening the cable core, where the heating temperature is 110 °C and the heating time is 8 hours; and then, checking the condition of the conductor at the fault point, and if the conductor is not damaged, sanding the conductor smooth with sandpaper, and then wrapping the conductor with a semiconductive tape, and if the conductor is damaged, repairing and filling the damaged part of the conductor by brazing, and after filling, sanding the conductor smooth with sandpaper, and then wrapping with a semiconductive tape, so as to avoid increasing the repair time as the conduct disconnects; and then, machining fracture edges of the insulation layer at two ends of the conductor shielding recovery layer to respectively form a conical surface; cladding the same material as the insulation layer around the conductor shielding recovery layer and the conical surface in a manner of extruding by an extruder or wrapping by an insulation tape, to form an insulation recovery layer, where a slope angle of the conical surface is 40°; performing heating cross-linking on the insulation recovery layer using a vulcanization mold to ensure that a surface of the insulation recovery layer is free of bubbles, pits or cracks, where the cross-linking temperature is 260 °C, and the cross-linking time is 8 hours; wrapping a heating tape around the surface of the insulation recovery layer after the heating cross-linking treatment to degas, where the degassing temperature is 100 °C, and the degassing time is 26 hours; sanding the surface of the insulation recovery layer after degassing by using a sanding belt until smooth and making a diameter of the cable at the insulation recovery layer 3 mm larger than a diameter of the cable at the insulation layer; repairing the insulation shielding layer, the longitudinal water-blocking layer, the radial water-blocking layer, the non-metallic sheath layer, the filler layer, and the armor inner cushion layer in sequence, removing asphalt on a surface of the armor metal layer at a fracture using acetylene flame and stearic acid; welding the armor metal layer after removing the asphalt at the fracture; spraying asphalt paint onto the welded armor metal to complete the repair of the metal armor layer. Where the filler strips are marked with numbers and are joined by high-temperature heating in a corresponding order, and after joining is completed, the filler strips are winded along the path of the optical unit; the armor inner cushion layer is wrapped with two layers of 0.7 mm PBT (polybutylene terephthalate) tape, with an overlap of 40%; the outer coating layer is four layers of polypropylene winded rope.

When implementing, stripping or disconnection of the outer coating layer and the filler layer can be carried out as follows: first, a fault point O of the cable is determined through a cable fault locator, then, as shown in FIG. 4, a point A at a distance of 1 time a preset distance to the right of point O is marked, and a point B at a distance of 2 times the preset distance to the right of point O is marked, where the preset distance can be selected as needed, and is not specifically limited here; a point C at a distance of 1 time the preset distance to the left of point O is marked, and a point D at a distance of 2 times the preset distance to the left of point O is marked; and then, the outer coating layer (polypropylene winded rope) in the DB segment is stripped; the metal wires (metal armor layer) are grouped into sets of five wires each, marking the numbers 1, 2, 3... n (n is a positive integer) on left and right sides of point A simultaneously; the metal wires at point A are disconnected to divide the metal wires into AD segment and AB segment, where the AD segment includes 3 preset-distance lengths, and the AB segment includes 1 preset-distance length; after disconnecting the metal wire, the metal wires are stripped and tied up in groups, retaining the marks 1, 2, 3... n; the bending angle of the metal wire after being flared open can be less than 60 ° to ensure that the mechanical property of the metal wire is not significantly impaired; the filler strips on left and right sides of point C are marked with serial numbers 1, 2, 3... n, and then the filler strips are disconnected on point C, where the optical unit is embedded within the filler strips, so as to ensure the communication stability of the optical unit, and when the filler strips (the filler layer) are disconnected, the main optical unit is not disconnected, and the optical unit can be attached to the surface of the cable core; since the attachment of the optical unit to the surface of the cable core affects the repair of the cable core, one preset length of the power cable core EF segment including the fault point O can be cut off to ensure the redundancy of the length of the optical unit. When the optical unit is restored, the redundancy length can be consumed by increasing the winding pitch of the optical unit, and thus it can be ensured that the optical unit is not disconnected when there is a redundant length, and reduce the recovery time of the optical unit joint, and it is still possible to ensure smooth communication to a certain extent during the cable repair process.

The repair method for the submarine cable provided in the embodiments of the present invention includes the following steps: determining a fault point of a cable, where the cable includes a conductor and a wrapping layer, the wrapping layer is cladded around the conductor; stripping the wrapping layer of a portion of the cable at the fault point to expose a portion of the conductor of the cable, repairing the conductor and the wrapping layer, where the wrapping layer includes a conductor shielding layer cladded around the conductor, then, repairing the wrapping layer including: repairing the conductor shielding layer, where repairing the conductor shielding layer includes the following steps: wrapping the same material as the conductor shielding layer in the cable around the exposed conductor; performing molding and vulcanization by using an extrusion die to form a conductor shielding recovery layer on a surface of the conductor, where the vulcanization temperature is 155-165 °C, and the vulcanization time is 30 minutes; and sanding a surface of the conductor shielding recovery layer with sandpaper. In the repair method for the submarine cable provided in the present invention, a fault point of a cable is firstly determined, where the cable includes a conductor and a wrapping layer, and the wrapping layer is cladded around the conductor; next, the wrapping layer of a portion of the cable at the fault point is stripped to expose a portion of the conductor of the cable; and then the conductor and the wrapping layer are repaired, where the wrapping layer includes a conductor shielding layer, the conductor shielding layer is cladded around the conductor, and when repairing the conductor shielding layer, the same material as the conductor shielding layer in the cable is wrapped around the exposed conductor, and molding and vulcanization is performed by using an extrusion die, and after the vulcanization, a surface of the conductor shielding recovery layer is sanded with sandpaper. With this method, a damaged cable can be repaired on site, and the repaired cable can be consistent with the original cable without affecting the transfer and transportation of the cable, there is no need to wait for the cable to be repaired during installation, which reduces the construction period and the construction cost.

In addition, the present invention further provides a submarine cable, and the submarine cable is applied to any one of the repair methods for the submarine cable in the above embodiments. The submarine cable may include a conductor and a wrapping layer, and the wrapping layer is cladded around the conductor; the wrapping layer includes a conductor shielding layer, and the conductor shielding layer is cladded around the conductor.

Finally, it should be noted that the above embodiments are only used to illustrate the technical solutions of the present invention, and not to limit them. Although the present invention has been described in detail with reference to the aforementioned embodiments, those skilled in the art should understand that they can still modify the technical solutions described in the aforementioned embodiments, or equivalently replace some or all of the technical features therein. And these modifications or substitutions do not make the essence of the corresponding technical solutions deviate from the scope of the technical solutions of various embodiments of the present invention.

## Claims

1. A repair method for a submarine cable, comprising the following steps:
determining a fault point of a cable, wherein the cable comprises a conductor and a wrapping layer, and the wrapping layer is cladded around the conductor;
stripping a portion of the wrapping layer at the fault point to expose a portion of the conductor of the cable, wherein the wrapping layer comprises a metal armor layer and a conductor shielding layer, and stripping the portion of the wrapping layer at the fault point comprises: stripping the metal armor layer and the conductor shielding layer;
stripping the metal armor layer comprises: stripping the metal armor layer with a length of 1.5 to 2.5 times an armor-pitch length on two sides of the fault point and ensuring that a disconnection point of the stripped metal armor layer is 0.3 to 0.7 times the armor-pitch length away from the fault point; and bending the stripped metal armor layer in opposite directions at the disconnection point and ensuring a bending angle of the metal armor layer less than 60°;
heating the exposed portion of the conductor at a temperature of 80-85 °C for 6-8 hours; and
repairing the conductor and the wrapping layer, wherein repairing the wrapping layer comprises: repairing the conductor shielding layer and the metal armor layer;
wherein repairing the conductor shielding layer comprises: wrapping the same material as the conductor shielding layer in the cable around the exposed conductor, performing molding and vulcanization by using an extrusion die at a temperature of 155-165 °C for 25 to 35 minutes to form a conductor shielding recovery layer on a surface of the conductor, and sanding a surface of the conductor shielding recovery layer with sandpaper.

2. The repair method for a submarine cable according to claim 1, wherein the wrapping layer further comprises an insulation layer, and the insulation layer is cladded around the conductor shielding layer; repairing the wrapping layer further comprises: repairing the insulation layer; wherein repairing the insulation layer comprises the following steps:
machining fracture edges of the insulation layer at two ends of the conductor shielding recovery layer to respectively form a conical surface; and
cladding the same material as the insulation layer around the conductor shielding recovery layer and the conical surface in a manner of extruding by an extruder or wrapping by an insulation tape to form an insulation recovery layer, wherein a slope angle of the conical surface is between 30 °-40 °.

3. The repair method for a submarine cable according to claim 2, wherein repairing the insulation layer further comprises the following steps: performing a heating cross-linking treatment on the insulation recovery layer using a vulcanization mold at a temperature of 240-280 °C for 6-8 hours to ensure that a surface of the insulation recovery layer is free of bubbles, pits or cracks.

4. The repair method for a submarine cable according to claim 3, wherein repairing the insulation layer further comprises the following steps: wrapping a heating tape around the surface of the insulation recovery layer after the heating cross-linking treatment at a temperature of 85-90 °C to degas, with a degassing time being not less than 24 hours.

5. The repair method for a submarine cable according to claim 4, wherein repairing the insulation layer further comprises the following steps: sanding the surface of the insulation recovery layer after degassing by using a sanding belt until smooth, and making a diameter of the cable at the insulation recovery layer 2-3 mm larger than a diameter of the cable at the insulation layer.

6. The repair method for a submarine cable according to claim 5, wherein repairing the metal armor layer comprises the following steps:
removing asphalt on a surface of the armor metal layer at a fracture using acetylene flame and stearic acid;
welding the armor metal layer after removing the asphalt at the fracture; and
spraying asphalt paint onto the welded armor metal.

7. The repair method for a submarine cable according to any one of claims 1-6, wherein repairing the conductor specifically comprises:
sanding the surface of the conductor with sandpaper until smooth; and
wrapping a semiconductive tape around the surface of the conductor after sanding smooth.

8. The repair method for a submarine cable according to any one of claims 1-6, wherein repairing the conductor specifically comprises:
repairing and filling a damaged area of the conductor by brazing;
sanding the surface of the conductor after repairing and filling by using sandpaper until smooth; and
wrapping a semiconductive tape around the surface of the conductor.

9. The repair method for a submarine cable according to any one of claims 1-6, wherein a length of the exposed portion the conductor of the cable is greater than 20 cm.

10. A submarine cable, wherein the submarine cable is applied to the repair method for a submarine cable in any one of claims 1-9.
